# EUROPÄISCHE PATENTSCHRIFT

(11) **EP 0 304 653 B1**
(45) Veröffentlichungstag und Bekanntmachung des Hinweises auf die Patenterteilung: **27.04.1994**
(21) Anmeldenummer: 88112053.9
(22) Anmeldetag: 26.07.1988
(51) Int. Cl.: H04M 3/50, H04M 3/42

(54) **Verfahren und Anordnung zur Abspeicherung von Fernmeldenachrichten in einer Fernmeldenebenstellenanlage**
Method and arrangement for storing telecommunication messages in a private telecommunication exchange
Méthode et agencement pour l'enregistrement de messages de télécommunication dans un central de télécommunication privé

(30) Priorität: 28.08.1987 DE 3728807
(43) Veröffentlichungstag der Anmeldung: 01.03.1989
(73) Patentinhaber: SIEMENS AKTIENGESELLSCHAFT, 80333 München (DE)
(72) Erfinder: von Ow, Hans-Peter, Dr.-Ing., D-8000 München 71 (DE); Witt, Dieter, Ing. HTL., CH-8143 Stallikon (CH); Flierl-Mayer, Gabriele, D-8027 Neuried (DE); Aicher, Helmut, Dr.rer. nat., D-8000 München 21 (DE)

(56) Entgegenhaltungen:
- WO-A-86/04473
- DE-A- 3 234 081
- PATENT ABSTRACTS OF JAPAN, Band 10, Nr. 279 (E-439)[2335], 20. September 1986 & JP-A-61 100 068
- REVIEW OF THE ELECTRICAL COMMUNICATION LABORATORIES, Band 32, Nr. 6, November 1984, Seiten 976-984; S. MATSUSHITA et al.: "Message handling system"

## Beschreibung

Die Erfindung betrifft ein Verfahren und eine Anordnung zur Abspeicherung von Fernmeldenachrichten nach dem Oberbegriff des Patentanspruchs 1 bzw. 4.

Verfahren und Anordnungen zur Abspeicherung von Fernsprechnachrichten in Fernsprechnebenstellenanlagen sind bekannt. So sind aus den Druckschriften INTERNATIONAL SWITCHING SYMPOSIUM, 7th - 11th May 1979, Paris, Seiten 1256 - 1262, G.D. Bergland et al.: "New custom calling services" und aus VMX User's Guide, Nr. 071-0600-002A, Dallas (USA) 1986, Anordnungen mit einem Speichersystem bekannt, das der Hinterlegung von Fernsprechnachrichten dient. Benutzer dieser Systeme können beim Abruf für sie bestimmter Nachrichten durch die Eingabe eines Befehls in ihr Fernsprechgerät die Wiedergabe einer Nachricht unter brechen und die Wiedergabe der folgenden Nachricht bewirken oder nur die Namen oder die Rufnummern der Nachrichtenabsender hintereinander abfragen und bestimmte Nachrichten zum Abruf auswählen. Die bekannten Anordnungen enthalten offenbar nur ein Speichersystem, das entsprechend der Zahl der Fernsprechanschlüsse und der teilnehmerindividuell zugeordneten Speicherkapazität relativ groß ausgelegt ist. In der Praxis ergibt sich bei derartigen Anordnungen mit sogenannten Mailboxen ein großer Speicherbedarf auch dadurch, daß diesselbe Nachricht einmal in der Speichereinrichtung des Nachrichtenempfängers und einmal in der Speichereinrichtung des Nachrichtenabsenders hinterlegt wird. Der Nachrichtenabsender hinterlegt die Nachricht in einer ihm zugeordneten Speichereinrichtung, um bei einer an ihn gerichteten Antwort des Nachrichtenempfängers die antwortauslösende Nachricht zur Kenntnis nehmen zu können. Ein noch größerer Speicherbedarf ergibt sich, wenn zur Wiederherstellung der Speicherinhalte bei einem Spannungsausfall ein besonders gesicherter Hintergrundspeicher vorgesehen ist.

Aus der internationalen Patentanmeldung Nr. WO-A-8 604 473 ist bereits ein "Integrated Message Service System" bekannt, das beispielsweise aus einem "Voice mail service system" und weiteren "Message Center Service Systemen" besteht. Ein der Systemsteuerung zugeordnetes Programm ist dabei in der Weise ausgestaltet, daß für jedes Teilsystem eine nachrichtenadressatenindividuelle Information erzeugt wird, die auf das Vorliegen bzw. auf das Nichtvorliegen von ("unretrieved") Nachrichten hinweist, die von dem jeweiligen Nachrichtenadressaten noch nicht zur Kenntnis genommen worden sind.

Der Erfindung liegt die Aufgabe zugrunde, ein Verfahren und eine Anordnung der eingangs genannten Art anzugeben, wobei sowohl Nachrichtenabsender als auch Nachrichtenempfänger auch bei nur einer einmaligen Nachrichtenabspeicherung auf die Nachricht zugreifen können.

Die Lösung dieser Aufgabe erfolgt erfindungsgemäß mit den Merkmalen des Patentanspruchs 1.

Eine Abfrage eines potentiellen Nachrichtenempfängers nach für ihn in beliebigen Teilsystemen möglicherweise vorliegenden Nachrichten reduziert sich auf die Abfrage genau einer Information, die zentral abgespeichert ist. Die Abfrage erfolgt damit mit einem relativ geringen Rechenaufwand. Dieser Vorteil ist insbesondere in den Fällen ausgeprägt, in denen sich bei der Abfrage ergibt, daß für den abfragenden Systembenutzer keine Nachricht vorliegt. Liegt dagegen eine Nachricht für den Systembenutzer vor, so kann er anstelle der Gesamtnachrichten lediglich kurzgefaßte Nachrichtenteile abrufen, die beispielsweise aus den ersten alphanumerischen Zeichen der jeweiligen Nachricht bestehen. Damit erhält der Systembenutzer einen schnellen Überblick über die für ihn vorliegenden Nachrichten. Neben der entsprechenden Zeitersparnis ist wiederum der gegenüber dem Abruf der Gesamtnachrichten relativ geringe Rechenaufwand im System von Vorteil. Von Vorteil ist weiterhin, daß Änderungen der Nachricht, die vor dem Abruf durch den Nachrichtenempfänger erfolgen, in einfacher Weise und ebenfalls wieder mit geringem Rechenaufwand erfolgen, ohne daß ein Zugriff auf die Speichereinrichtung des Nachrichtenempfängers erforderlich ist.

Weitere Vorteile ergeben sich aus der Beschreibung und den Unteransprüchen.

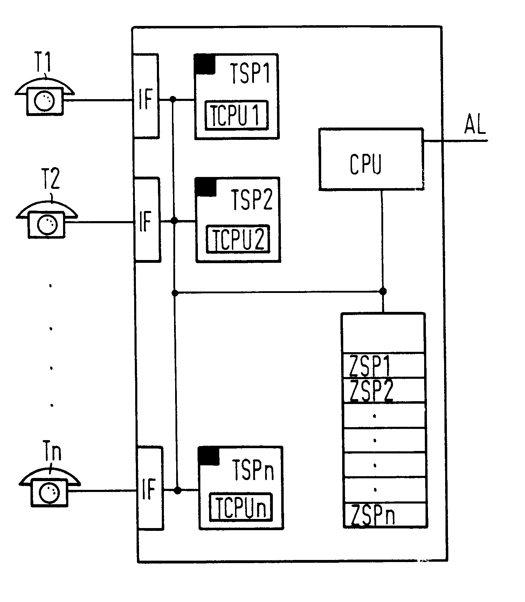

Das Verfahren und die Anordnung gemäß der Erfindung werden nun anhand der Figur beschrieben.

Die Figur zeigt eine schematische Darstellung einer Anordnung zur Abspeicherung von Fernmeldenachrichten mit den für das Verständnis der Erfindung notwendigen Komponenten. Derartige Speicheranordnungen werden im allgemeinen als "Mailbox-Systeme" bezeichnet und sind in ihrer Grundstruktur bekannt. Insoweit erübrigt sich sowohl eine detaillierte Darstellung der schaltungstechnischen Realisierung als auch eine Beschreibung der Vorgänge bei der Abspeicherung und dem Abruf von Nachrichten aus der Anordnung.

Die in der Figur dargestelle Anordnung besteht aus Schnittstellen IF zum Anschluß von Fernmeldeendstellen T1, T2, ... Tn, von denen neben den eigentlichen Fernmeldenachrichten und Rufnummern an eine zentrale Steuerung CPU gerichtete Befehle erzeugbar sind. Die Anordnung weist ferner den Teilnehmerendstellen T1, T2, ... Tn zugeordnete erste und zweite Speichereinrichtungen ZSP1, TSP1; ZSP2, TSP2; ... ZSPn, TSPn auf. Die Fernmeldenachrichten sowie kurzgefaßte Nachrichtenteile, die die Fernmeldenachrichten bezeichnen, werden in der zweiten Speichereinrichtung des Nachrichtenabsenders, z.B. TSP1, abgespeichert. Ein Nachrichtenhinweis, der insbesondere nur aus einem Bit besteht, das das Vorliegen bzw. das Nichtvorliegen von Nachrichten in den zweiten Speichereinrichtungen kennzeichnet, wird in der ersten Speichereinrichtung des Nachrichtenempfängers, z.B. ZSP2, abgespeichert. Die Kapazität der ersten Speichereinrichtungen ZSP1, ZSP2, ... ZSPn kann klein im Verhältnis zur Kapazität der zweiten Speichereinrichtungen TSP1, TSP2, ... TSPn bemessen werden. Die zentrale Steuerung CPU ist, wenn die Anordnung als Fernsprechnebenstellenanlage ausgebildet ist, mit einer oder mehreren Amtsleitungen AL verbunden.

Zu den von den Fernmeldeendstellen T1, T2, ... Tn erzeugbaren Befehlen gehören ein erster, ein zweiter und ein dritter Befehl.

Die Erzeugung der Befehle geschieht in bekannter Weise, beispielsweise bei Fernsprechgeräten mittels Mehrfrequenzwählzeichen oder mittels konventioneller Wählimpulse.

An die Anordnung sind Fernmeldeendstellen unterschiedlicher Kommunikationsdienste, z.B. Fernsprechdienst, Telexdienst und Bildschirmtextdienst, anschaltbar. Das Verfahren gemäß der Erfindung ist jedoch kommunikationsdiensteneutral.

Im folgenden wird das Verfahren gemäß der Erfindung in Verbindung mit Fernsprechendstellen T1 und T2 beschrieben. Es wird davon ausgegangen, daß an der Fernsprechendstelle T1 eine Nachricht erzeugt wird, die für die Fernsprechendstelle T2 bestimmt ist und von dieser abrufbar sein soll.

Nach dem Abheben des Telefonhörers bei T1 wird eine Verkehrsausscheidungskennziffer gewählt, die einen ersten Befehl darstellt. Der erste Befehl wird über die T1 zugeordnete Schnittstelle IF der zentralen Steuerung CPU zugeführt, die eine Verbindung von T1 zu der zweiten, T1 zugeordneten Speichereinrichtung TSP1 herstellt. Im folgenden erzeugt T1 die Rufnummer der Teilnehmerendstelle T2, für die die ebenfalls erzeugte Nachricht bestimmt ist. Die für T2 bestimmte Nachricht wird also in einer T1 zugeordneten Speichereinrichtung TSP1 abgespeichert. Nach dem Abschluß der Nachrichtenerzeugung, der der zentralen Steuerung CPU durch das Auflegen des Telefonhörers, durch Eingabe eines besonderen Befehls oder durch eine anderweitige Betätigung der Fernmeldeendstelle T1 signalisiert wird, erstellt die zentrale Steuerung CPU aus der gerade in der Speichereinrichtung TSP1 abgespeicherten Nachricht einen kurzgefaßten Nachrichtenteil, der beispielsweise aus den ersten alphanumerischen Zeichen der Nachricht besteht. Die Bildung des Nachrichtenteils kann ohne Mitwirkung der zentralen Steuerung CPU durch eine separate der Speichereinrichtung TSP1 zugeordnete Steuereinrichtung TCPU1 erfolgen. Jeder zweiten Speichereinrichtung TSP1, TSP2, ... TSPn kann jeweils eine derartige separate Steuereinrichtung TCPU1, TCPU2, ... TCPUn zugeordnet sein. Der Nachrichtenteil wird durch die zentrale Steuerung CPU oder die jeweilige separate Steuereinrichtung ebenfalls in die Speichereinrichtung TSP1 eingelesen und mit der Rufnummer des Nachrichtenempfängers, die bereits zusammen mit der eigentlichen Nachricht im Speicher TSP1 abgespeichert ist, verknüpft. Der Nachrichtenteil ist von der zentralen Steuerung CPU abrufbar.

Die zentrale Steuerung CPU bildet weiterhin ausgelöst durch den ersten Befehl einen für die erste Speichereinrichtung ZSP2 der zweiten Fernmeldeendstelle T2 bestimmten Nachrichtenhinweis. Der Nachrichtenhinweis besteht insbesondere aus einem Bit, das das Vorliegen oder Nichtvorliegen von Nachrichten in den zweiten Speichereinrichtungen TSP1, TSP2, ... TSPn kennzeichnet, und wird durch die Steuerung CPU in die Speichereinrichtung ZSP2 eingeschrieben. Liegt dort bereits ein Nachrichtenhinweis vor, der darauf hinweist, daß für T2 bereits Nachrichten in beliebigen zweiten Speichereinrichtungen TSP1, TSP2, ... TSPn vorliegen, bleibt der ursprüngliche Nachrichtenhinweis unverändert. Der Nachrichtenhinweis bleibt ebenso unverändert, wenn die in dem zweiten Speichereinrichtungen TSP1, TSP2, ... TSPn für T2 vorliegende Nachrichten verändert werden. Der Nachrichtenhinweis wird durch die Steuerung CPU, die die zweiten Speichereinrichtungen TSP1, TSP2, ... TSPn fortlaufend auf das Vorliegen beziehungsweise Nichtvorliegen von Nachrichten für jede Teilnehmerstelle T1, T2, ... Tn überwacht, gelöscht, wenn in keiner der zweiten Speichereinrichtungen TSP1, TSP2, ... TSPn eine Nachricht für die nachrichtenempfangenden Fernmeldeendstelle vorliegt.

Diese Aktualisierung der Nachrichtenhinweise kann auch im Zusammenwirken mit den separaten Steuereinrichtungen TCPU1, TCPU2, ... TCPUn zum Beispiel in der Weise erfolgen, daß die zentrale Steuerung CPU nach dem Einschreiben von Nachrichtenhinweisen in die ersten, nachrichtenempfangenden Fernmeldeendstellen zugeordneten Speichereinrichtungen ZSP1, ZSP2, ... ZSPn die jeweiligen dezentralen Steuereinrichtungen TCPU1, TCPU2, ... TCPUn zur Überwachung der zweiten Speichereinrichtungen TSP1, TSP2, ... TSPn auf das Löschen aller abgespeicherten, für jeweils eine Fernmeldeendstelle T1, T2, ... Tn bestimmten Nachrichten veranlaßt. Die dezentrale Steuerungen TCPU1, TCPU2, ... TCPUn teilen der zentralen Steuerung CPU beim Löschen aller abgespeicherter Nachrichten eine entsprechende Information mit, die, sofern für eine bestimmte Fernmeldeendstelle T1, T2, ... Tn keine Nachricht mehr in den zweiten Speichereinrichtungen TSP1, TSP2, ... TSPn vorliegt, den zugehörigen Nachrichtenhinweis in der jeweiligen ersten Speichereinrichtung ZSP1, ZSP2, ... ZSPn löscht.

Die zweite Fernmeldeendstelle T2 kann in bekannter Weise den Inhalt der ihr zugeordneten Speichereinrichtungen ZSP2 und TSP2 abfragen.

Bei dem Verfahren gemäß der Erfindung erzeugt die zweite Fernmeldeendstelle T2 einen zweiten Befehl, der, sofern Nachrichten für T2 vorliegen, eine von der Fernmeldenebenstellenanlage ausgehende sukzessive Mitteilung jeweils eines Nachrichtenteils auslöst. Die zentrale Steuerung CPU nimmt den zweiten Befehl auf, steuert die erste Speichereinrichtung ZSP2 der befehlsgebenden Fernmeldeendstelle T2 an, und fragt die Speichereinrichtung ZSP2 auf das Vorliegen eines Nachrichtenhinweises ab. Liegt dort ein Nachrichtenhinweis vor, ruft die Steuerung CPU aus den zweiten Speichereinrichtungen TSP1, .... TSPn für die zweite Fernmeldeendstelle T2 bestimmte Nachrichtenteile ab und führt diese der Fernmeldeendstelle T2 zu.

Durch den zweiten Befehl wird entweder die Mitteilung eines Nachrichtenteils oder die Mitteilung einer Folge von Nachrichtenteilen ausgelöst. Im ersten Fall ist für jede weitere Mitteilung ein weiterer zweiter Befehl in die Fernmeldeendstelle T2 einzugeben; im zweiten Fall ist ein besonderer Befehl erforderlich, um die Mitteilungsfolge zu unterbrechen.

Die abgerufenen Nachrichtenteile sind akustisch und/oder optisch an der die Nachrichtenteile abrufenden Fernmeldeendstelle darstellbar. Fernsprechgeräte weisen hierzu eine entsprechende Anzeigeeinrichtung auf.

Mittels eines dritten Befehls ruft die zweite Fernmeldeendstelle T2 die zu dem gerade mitgeteilten Nachrichtenteil zugehörige vollständige Nachricht ab. Die zentrale Steuerung CPU ruft ausgelöst durch den dritten Befehl die durch den mitgeteilten Nachrichtenteil bezeichnete Nachricht aus der zweiten, der nachrichtenabsendenden Fernmeldeendstelle T1 zugeordneten Speichereinrichtung TSP1 ab und führt diese der zweiten Fernmeldeendstelle T2 zu.

Die abgerufenen Nachrichten sind ebenso wie die abgerufenen Nachrichtenteile akustisch und/oder optisch an der die Nachrichten abrufenden Fernmeldeendstelle darstellbar.

## Patentansprüche

1. Verfahren zur Abspeicherung von Fernmeldenachrichten in einer Fernmeldenebenstellenanlage bestehend aus Schnittstellen (IF) zum Anschluß von Fernmeldeendstellen (T1, T2, ... Tn), mit denen neben den eigentlichen Fernmeldenachrichten und Rufnummern Befehle erzeugbar sind, die im Zusammenhang mit dem Einschreiben von Nachrichten in den Fernmeldeendstellen (T1, T2, ... Tn) zugeordneten ersten und zweiten Speichereinrichtungen (ZSP1, TSP1; ZSP2, TSP2, ... ZSPn, TSPn) und dem Auslesen der Nachrichten aus diesen Speichereinrichtungen (ZSP1, TSP1; ZSP2, TSP2; ... ZSPn, TSPn) stehen, und aus einer mit den Schnittstellen (IF) und dem ersten und zweiten Speichereinrichtungen (ZSP1, TSP1; ZSP2, TSP2; ... ZSPn, TSPn) verbundenen Steuerung (CPU), der ein Programm zugeordnet ist, das in der Weise ausgestaltet ist, daß Hinweise auf das Vorliegen bzw. Nichtvorliegen von empfängerindividuellen Nachrichten generiert werden,
**dadurch gekennzeichnet,**
daß die zentrale Steuerung (CPU) ausgelöst durch einen von einer ersten Fernmeldeendstelle (T1) erzeugten ersten Befehl für eine zweite Fernmeldeendstelle (T2) bestimmte Nachrichten, die mit der Rufnummer der zweiten Fernmeldeendstelle (T2) ergänzt sind, in die zweite, der ersten Fernmeldeendstelle (T1) zugeordnete Speichereinrichtung (TSP1) einschreibt, daß die zentrale Steuerung (CPU) weiterhin ausgelöst durch den ersten Befehl aus den Nachrichten kurzgefaßte Nachrichtenteile erstellt und diese ebenfalls in die zweite, der ersten Fernmeldeendstelle (T1) zugeordnete Speichereinrichtung (TSP1) einschreibt, und daß die zentrale Steuerung (CPU) weiterhin ausgelöst durch den ersten Befehl in der ersten, der zweiten Fernmeldeendstelle (T2) zugeordneten Speichereinrichtung (ZSP2) einen Hinweis auf das Vorliegen mindestens einer Nachricht einschreibt,
daß die zentrale Steuerung (CPU) ausgelöst durch einen von der zweiten Fernmeldeendstelle (T2) erzeugten zweiten Befehl, der eine von der Fernmeldenebenstellenanlage ausgehende sukzessive Mitteilung jeweils eines für die zweite Fernmeldeendstelle (T2) abgespeicherten Nachrichtenteils bezeichnet, die erste, der zweiten Fernmeldeendstelle (T2) zugeordnete Speichereinrichtung (ZSP2) auf das Vorliegen eines Nachrichtenhinweises abfragt, und bei Vorliegen eines Nachrichtenhinweises aus den zweiten Speichereinrichtungen (TSP1, ... TSPn) für die zweite Fernmeldeendstelle (T2) bestimmte Nachrichtenteile abruft und der zweiten Fernmeldeendstelle (T2) zuführt,
daß die zentrale Steuerung (CPU) die zweiten Speichereinrichtungen (TSP1, TSP2, ... TSPn) auf das Vorliegen von Nachrichten für bestimmte nachrichtenempfangende Fernmeldeendstellen überwacht und bei Zugang je einer ersten Nachricht einen entsprechenden Nachrichtenhinweis in die ersten, der jeweiligen nachrichtenempfangenden Fernmeldeendstelle (T1, T2, ... Tn) zugeordneten Speichereinrichtungen (ZSP1, ZSP2, ... ZSPn) einschreibt,
daß die zentrale Steuerung (CPU) ausgelöst durch einen dritten von der zweiten Fernmeldeendstelle (T2) erzeugten Befehl bei Vorliegen eines Nachrichtenhinweises in der ersten, der zweiten Fernmeldeendstelle (T2) zugeordneten Speichereinrichtung (ZSP2) für die zweite Fernmeldeendstelle (T2) bestimmte Nachrichten aus den zweiten Speichereinrichtungen (TSP1, ... TSPn) abruft und der zweiten Fernmeldeendstelle (T2) zuführt.

2. Verfahren nach Anspruch 1,
**dadurch gekennzeichnet,**
daß die zentrale Steuerung (CPU) ausgelöst durch den ersten Befehl nach dem Einschreiben der von der ersten Fernmeldeendstelle (T1) erzeugten, für die zweite Fernmeldeendstelle (T2) bestimmten Nachrichten und der Rufnummer der zweiten Fernmeldeendstelle (T2) eine dezentrale Steuereinrichtung (TCPU1), die der zweiten Speichereinrichtung (TSP1) der ersten Fernmeldeendstelle (T1) zugeordnet ist, zur Bildung der Nachrichtenteile veranlaßt, und daß die dezentrale Steuerung (TCPU1) anstelle der zentralen Steuerung (CPU) die Nachrichtenteile bildet.

3. Verfahren nach Anspruch 1 oder 2,
**dadurch gekennzeichnet,**
daß die zentrale Steuerung (CPU) nach dem Einschreiben von Nachrichtenhinweisen in die ersten, nachrichtenabsendenden Fernmeldeendstellen zugeordneten Speichereinrichtungen (ZSP1, ZSP2, ... ZSPn) die jeweiligen dezentralen Steuereinrichtungen (TCPU1, TCPU2, ... TCPUn) zur Überwachung der zweiten Speichereinrichtungen (TSP1, TSP2, ... TSPn) auf das Löschen aller abgespeicherten, für jeweils eine Fernmeldeendstelle (T1, T2, ... Tn) bestimmten Nachrichten veranlaßt, und daß die dezentralen Steuerungen (TCPU1, TCPU2, ... TCPUn) beim Löschen aller abgespeicherten Nachrichten eine entsprechende Information der zentralen Steuerung (CPU) mitteilen und daß die zentrale Steuerung (CPU) sofern für eine bestimmte Fernmeldeendstelle (T1, T2, ... Tn) keine Nachricht mehr in den zweiten Speichereinrichtungen (TSP1, TSP2, ... TSPn) vorliegt, den zugehörigen Nachrichtenhinweis in der jeweiligen ersten Speichereinrichtung (ZSP1, ZSP2, ... ZSPn) löscht.

4. Anordnung zur Abspeicherung von Fernmeldenachrichten in einer Fernmeldenebenstellenanlage bestehend aus Schnittstellen (IF) zum Anschluß von Fernmeldeendstellen (T1, T2, ... Tn), mit denen neben den eigentlichen Fernmeldenachrichten und Rufnummern Befehle erzeugbar sind, die im Zusammenhang mit dem Einschreiben von Nachrichten in den Fernmeldeendstellen (T1, T2, ... Tn) zugeordneten ersten und zweiten Speichereinrichtungen (ZSP1, TSP1; ZSP2, TSP2, ... ZSPn, TSPn) und dem Auslesen der Nachrichten aus diesen Speichereinrichtungen (ZSP1, TSP1; ZSP2, TSP2; ... ZSPn, TSPn) stehen, und aus einer mit den Schnittstellen (IF) und dem ersten und zweiten Speichereinrichtungen (ZSP1, TSP1; ZSP2, TSP2; ... ZSPn, TSPn) verbundenen Steuerung (CPU), der ein Programm zugeordnet ist, das in der Weise ausgestaltet ist, daß Hinweise auf das Vorliegen bzw. Nichtvorliegen von empfängerindividuellen Nachrichten generiert werden,
**dadurch gekennzeichnet,**
daß die zentrale Steuerung (CPU) ausgelöst durch einen von einer ersten Fernmeldeendstelle (T1) erzeugten ersten Befehl für eine zweite Fernmeldeendstelle (T2) bestimmte Nachrichten, die mit der Rufnummer der zweiten Fernmeldeendstelle (T2) ergänzt sind, in die zweite, der ersten Fernmeldeendstelle (T1) zugeordnete Speichereinrichtung (TSP1) einschreibt, daß die zentrale Steuerung (CPU) weiterhin ausgelöst durch den ersten Befehl aus den Nachrichten kurzgefaßte Nachrichtenteile erstellt und diese ebenfalls in die zweite, der ersten Fernmeldeendstelle (T1) zugeordnete Speichereinrichtung (TSP1) einschreibt, und daß die zentrale Steuerung (CPU) weiterhin ausgelöst durch den ersten Befehl in der ersten, der zweiten Fernmeldeendstelle (T2) zugeordneten Speichereinrichtung (ZSP2) einen Hinweis auf das Vorliegen mindestens einer Nachricht einschreibt,
daß die zentrale Steuerung (CPU) ausgelöst durch einen von der zweiten Fernmeldeendstelle (T2) erzeugten zweiten Befehl, der eine von der Fernmeldenebenstellenanlage ausgehende sukzessive Mitteilung jeweils eines für die zweite Fernmeldeendstelle (T2) abgespeicherten Nachrichtenteils bezeichnet, die erste, der zweiten Fernmeldeendstelle (T2) zugeordnete Speichereinrichtung (ZSP2) auf das Vorliegen eines Nachrichtenhinweises abfragt, und bei Vorliegen eines Nachrichtenhinweises aus den zweiten Speichereinrichtungen (TSP1, ... TSPn) für die zweite Fernmeldeendstelle (T2) bestimmte Nachrichtenteile abruft und der zweiten Fernmeldeendstelle (T2) zuführt,
daß die zentrale Steuerung (CPU) die zweiten Speichereinrichtungen (TSP1, TSP2, ... TSPn) auf das Vorliegen von Nachrichten für bestimmte nachrichtenempfangende Fernmeldeendstellen überwacht und bei Zugang je einer ersten Nachricht einen entsprechenden Nachrichtenhinweis in die ersten, der jeweiligen nachrichtenempfangenden Fernmeldeendstelle (T1, T2, ... Tn) zugeordneten Speichereinrichtungen (ZSP1, ZSP2, ... ZSPn) einschreibt,
daß die zentrale Steuerung (CPU) ausgelöst durch einen dritten von der zweiten Fernmeldeendstelle (T2) erzeugten Befehl bei Vorliegen eines Nachrichtenhinweises in der ersten, der zweiten Fernmeldeendstelle (T2) zugeordneten Speichereinrichtung (ZSP2) für die zweite Fernmeldeendstelle (T2) bestimmte Nachrichten aus den zweiten Speichereinrichtungen (TSP1, ... TSPn) abruft und der zweiten Fernmeldeendstelle (T2) zuführt.

5. Anordnung nach Anspruch 4,
**dadurch gekennzeichnet,**
daß den zweiten Speichereinrichtungen (TSP1, TSP2, ... TSPn) separate, mit der zentralen Steuerung (CPU) zusammenwirkende Steuerungen (TCPU1, TCPU2, ... TCPUn) zugeordnet sind.

## Claims

1. Method for storing telecommunication messages in a private telecommunication exchange comprising interfaces (IF) for connecting telecommunication terminals (T1, T2, ... Tn), by means of which, in addition to the actual telecommunication messages and directory numbers, commands can be generated which are connected with the writing of messages into first and second storage devices (ZSP1, TSP1; ZSP2, TSP2, ... ZSPn, TSPn) allocated to the telecommunication terminals (T1, T2, ... Tn) and the reading of the messages out of these storage devices (ZSP1, TSP1; ZSP2, TSP2; ... ZSPn, TSPn), and a processor (CPU), which is connected to the interfaces (IF) and the first and second storage devices (ZSP1, TSP1; ZSP2, TSP2; ... ZSPn, TSPn), to which processor a program is allocated which is designed in such a manner that indications of the presence or non-presence of receiver-individual messages are generated, characterized in that the central processor (CPU), triggered by a first command generated by a first telecommunication terminal (T1), writes messages intended for a second telecommunication terminal (T2), which are supplemented by the directory number of the second telecommunication terminal (T2), into the second storage device (TSP1) allocated to the first telecommunication terminal (T1), that the central processor (CPU), furthermore triggered by the first command, generates brief message sections from the messages and also writes these into the second storage device (TSP1) allocated to the first telecommunication terminal (T1), and that the central processor (CPU), furthermore triggered by the first command, writes an indication of the presence of at least one message into the first storage device (ZSP2) allocated to the second telecommunication terminal (T2), that the central processor (CPU), triggered by a second command which is generated by the second telecommunication terminal (T2) and which designates a progressive notice, coming from the private telecommunication exchange, of in each case one message section stored for the second telecommunication terminal (T2), interrogates the first storage device (ZSP2) allocated to the second telecommunication terminal (T2) for the presence of a message indication, and, in the event of the presence of a message indication, retrieves certain message sections intended for the second telecommunication terminal (T2) from the second storage devices (TSP1, ... TSPn) and supplies these to the second telecommunication terminal (T2), that the central processor (CPU) monitors the second storage devices (TSP1, TSP2, ... TSPn) for the presence of messages for particular message-receiving telecommunication terminals and, on reception of in each case a first message, writes a corresponding message indication into the first storage devices (ZSP1, ZSP2, ... ZSPn) allocated to the respective message-receiving telecommunication terminal (T1, T2, ... Tn), that the central processor (CPU), triggered by a third command generated by the second telecommunication terminal (T2), when a message indication is present in the first storage device (ZSP2) allocated to the second telecommunication terminal (T2), retrieves messages intended for the second telecommunication terminal (T2) from the second storage devices (TSP1, ... TSPn) and supplies these to the second telecommunication terminal (T2).

2. Method according to Claim 1, characterized in that the central processor (CPU), triggered by the first command, after the writing-in of the messages, generated by the first telecommunication terminal (T1) and intended for the second telecommunication terminal (T2), and of the directory number of the second telecommunication terminal (T2), causes a decentralized processing device (TCPU1), which is allocated to the second storage device (TSP1) of the first telecommunication terminal (T1), to form the message sections, and that it is the decentralized processor (TCPU1) instead of the central processor (CPU) which forms the message sections.

3. Method according to Claim 1 or 2, characterized in that the central processor (CPU), after the writing-in of message indications into the first storage devices (ZSP1, ZSP2, ... ZSPn) allocated to message-transmitting telecommunication terminals, causes the respective decentralized processing devices (TCPU1, TCPU2, ... TCPUn) to monitor the second storage devices (TSP1, TSP2, ... TSPn) for the deletion of all stored messages intended for in each case one telecommunication terminal (T1, T2, ... Tn), and that the decentralized processors (TCPU1, TCPU2, ... TCPUn), on deletion of all stored messages, provide a corresponding information item to the central processor (CPU), and that the central processor (CPU) deletes the associated message indication in the respective first storage device (ZSP1, ZSP2, ... ZSPn) if there is no further message for a particular telecommunication terminal (T1, T2, ... Tn) in the second storage devices (TSP1, TSP2, ... TSPn).

4. Arrangement for storing telecommunication messages in a private telecommunication exchange comprising interfaces (IF) for connecting telecommunication terminals (T1, T2, ... Tn), by means of which, in addition to the actual telecommunication messages and directory numbers, commands can be generated which are connected with the writing of messages into first and second storage devices (ZSP1, TSP1; ZSP2, TSP2; ... ZSPn, TSPn) allocated to the telecommunication terminals (T1, T2, ... Tn) and the reading of the messages out of these storage devices (ZSP1, TSP1; ZSP2, TSP2; ... ZSPn, TSPn), and a processor (CPU), which is connected to the interfaces (IF) and the first and second storage devices (ZSP1, TSP1; ZSP2, TSP2; ... ZSPn, TSPn), to which processor a program is allocated which is designed in such a manner that indications of the presence or non-presence of receiver-individual messages are generated, characterized in that the central processor (CPU), triggered by a first command generated by a first telecommunication terminal (T1), writes messages intended for a second telecommunication terminal (T2), which are supplemented by the directory number of the second telecommunication terminal (T2), into the second storage device (TSP1) allocated to the first telecommunication terminal (T1), that the central processor (CPU), furthermore triggered by the first command, generates brief message sections from the messages and also writes these into the second storage device (TSP1) allocated to the first telecommunication terminal (T1), and that the central processor (CPU), furthermore triggered by the first command, writes an indication of the presence of at least one message into the first storage device (ZSP2) allocated to the second telecommunication terminal (T2), that the central processor (CPU), triggered by a second command which is generated by the second telecommunication terminal (T2) and which designates a progressive notice, coming from the private telecommunication exchange, of in each case one message section stored for the second telecommunication terminal (T2), interrogates the first storage device (ZSP2) allocated to the second telecommunication terminal (T2) for the presence of a message indication, and, in the event of the presence of a message indication, retrieves certain message sections intended for the second telecommunication terminal (T2) from the second storage devices (TSP1, ... TSPn) and supplies these to the second telecommunication terminal (T2).

5. Arrangement according to Claim 4, characterized in that separate processors (TCPU1, TCPU2, ... TCPUn) interacting with the central processor (CPU) are allocated to the second storage devices (TSP1, TSP2, ... TSPn).

## Revendications

1. Procédé pour mémoriser des messages de télécommunication dans une installation de télécommunication à central privé constituée par des interfaces (IF) pour le raccordement de terminaux de télécommunication (T1, T2, ... Tn), à l'aide desquels peuvent être produites, en plus des messages de télécommunication et des numéros d'appels proprement dits, des instructions, qui sont associées à l'enregistrement de messages dans des premier et second dispositifs de mémoire (ZSP1, TSP1; ZSP2, TSP2, ... ZSPn, TSPn), associés aux terminaux de télécommunication (T1, T2, ...Tn), et à la lecture des messages à partir de ces dispositifs de mémoire (ZSP1, TSP1; ZSP2, TSP2; ... ZSPn, TSPn), et par une unité de commande (CPU), qui est reliée aux interfaces (IF) et aux premiers et seconds dispositifs de mémoire (ZSP1, TSP1; ZSP2, TSP2; ...; ZSPn, TSPn), et à laquelle est associé un programme qui est agencé de telle sorte que des indications concernant la présence ou l'absence d'un format de message prévu individuellement pour le récepteur sont produites,
caractérisé par le fait
que l'unité de commande centrale (CPU) enregistre, d'une manière déclenchée par une première instruction produite par un premier terminal de télécommunication (T1), des messages déterminés pour un second terminal de télécommunication (T2) et qui sont complétés par le numéro d'appel du second terminal de télécommunication (T2), dans le second dispositif de mémoire (TSP) associé au premier terminal de télécommunication (T1), que l'unité de commande centrale (CPU) établit, en outre, d'une manière déclenchée par la première instruction, des éléments de messages qui sont résumés à partir des messages et enregistre ces derniers également dans le second dispositif de mémoire (TSP1) associé ou premier terminal de télécommunication (T1), et que l'unité de commande centrale (CPU) enregistre en outre, d'une manière déclenchée par la première instruction, une indication concernant la présence d'au moins un message, dans le second dispositif de mémoire (ZSP2) associé au second terminal de télécommunication (T2),
que d'une manière déclenchée par une seconde instruction produite par le second terminal de télécommunication (T2) et qui désigne une communication successive, partant de l'installation de télécommunication à central privé, respectivement d'une partie de message mémorisée pour le second terminal de télécommunication (T2), l'unité de commande centrale (CPU) interroge le premier dispositif de mémoire (ZSP2) associé au second terminal de télécommunication (T2), en ce qui concerne la présence d'une indication de message, et, dans le cas de la présence d'une indication de message, interroge des parties déterminées de message à partir des seconds dispositifs de mémoire (TSP1, ... TSPn) pour le second terminal de télécommunication (T2) et les envoie au second terminal de télécommunication (T2),
que l'unité de commande centrale (CPU) contrôle les seconds dispositifs de mémoire (TSP1, TSP2, ... TSPn), en ce qui concerne la présence de messages pour des centraux déterminés de télécommunication, qui reçoivent des messages, et, lors de l'accès respectivement d'un premier message, enregistre une indication correspondante des messages dans les premiers dispositifs de mémoire (ZSP1, ZSP2... ZSPn), qui sont associés au terminal respectif de télécommunication (T1, T2, ..., Tn), qui reçoit les messages,
que, d'une manière déclenchée par une troisième instruction produite par le second terminal de télécommunication (T2), lors de la présence d'une indication de message dans le premier dispositif de mémoire (ZSP2) associé au second terminal de télécommunication (T2), l'unité de commande centrale (CPU) appelle des messages déterminés à partir des seconds dispositifs de mémoire (TSP1, ... TSPn) et les envoie au second terminal de télécommunication (T2).

2. Procédé suivant la revendication 1, caractérisé par le fait que d'une manière déclenchée par une première instruction, après l'enregistrement des messages produits par le premier terminal de télécommunication (T1) et destinés au second terminal de télécommunication (T2), et du numéro d'appel du second terminal de télécommunication (T2), l'unité de commande centrale (CPU) active un dispositif de commande décentralisé (TCPU1), qui est associé au second dispositif de mémoire (TSP) du premier terminal de télécommunication (T1), pour la formation des parties de message, et qu'à la place de l'unité de commande centrale (CPU), l'unité de commande décentralisée (TCPU1) forme les parties de message.

3. Procédé suivant la revendication 1 ou 2, caractérisé par le fait qu'après l'enregistrement d'indications de messages dans les premiers dispositifs de mémoire (ZSP1, ZSP2, ... ZSPn), qui sont associés à des premiers terminaux de télécommunications émettant des messages, l'unité de commande centrale (CPU) commande les dispositifs de commande décentralisés respectifs (TCPU1, TCPU2, ... TCPUn) pour qu'ils contrôlent les seconds dispositifs de mémoire (TSP1, TSP2, ... TSPn), pour déterminer si tous les messages mémorisés, destinés à des terminaux respectifs de télécommunication (T1, T2, ... Tn) sont effacés, et que lors de l'effacement de tous les messages mémorisés, les unités de commande décentralisées (TCPU1, TCPU2, ... TCPUn) transmettent une information correspondante à l'unité de commande centrale (CPU), et que dans la mesure où pour un terminal de télécommunication déterminé (T1, T2, ... Tn), plus aucune information n'est présente dans les seconds dispositifs de mémoire (TSP1, TSP2, ... TSPn), l'unité de commande centrale (CPU) efface l'indication associée de message dans le premier dispositif respectif de mémoire (ZSP1, ZSP2 ... ZSPn).

4. Dispositif pour la mémorisation de messages de télécommunication dans une installation de télécommunication à central privé, constituée par des interfaces (IF) pour le raccordement de terminaux de télécommunication (T1, T2, ... Tn), à l'aide desquels peuvent être produites, en plus des messages de télécommunication et des numéros d'appel proprement dits, des instructions, qui sont associées à l'enregistrement de messages dans des premier et second dispositifs de mémoire (ZSP1, TSP1; ZSP2, TSP2, ... ZSPn, TSPn), associés aux terminaux de télécommunication (T1, T2, ...Tn), et avec la lecture des messages à partir de ces dispositifs de mémoire (ZSP1, TSP1; ZSP2, TSP2; ...; ZSPn, TSPn), et par une unité de commande (CPU), qui est reliée aux interfaces (IF) et aux premiers et seconds dispositifs de mémoire (ZSP1, TSP1; ZSP2, TSP2; ...; ZSPn, TSPn), et à laquelle est associé un programme, qui est agencé de telle sorte que des indications concernant la présence ou l'absence d'un format de message prévu individuellement pour le récepteur sont produites,
caractérisé par le fait
que l'unité de commande centrale (CPU) enregistre, d'une manière déclenchée par une première instruction produite par un premier terminal de télécommunication (T1), des messages déterminés pour un second terminal de télécommunication (T2) et qui sont complétés par le numéro d'appel du second terminal de télécommunication (T2), dans le second dispositif de mémoire (TSP) associé au premier terminal de télécommunication (T1), que l'unité de commande centrale (CPU) établit en outre, d'une manière déclenchée par la première instruction, des éléments de messages qui sont résumés à partir des messages et enregistre ces derniers également dans le second dispositif de mémoire (TSP1) associé au premier terminal de télécommunication (T1), et que l'unité de commande centrale (CPU) enregistre, en outre, et d'une manière déclenchée par la première instruction, une indication concernant la présence d'au moins un message, dans le second dispositif de mémoire (ZSP2) associé au second terminal de télécommunication (T2),
que d'une manière déclenchée par une seconde instruction produite par le second terminal de télécommunication (T2) et qui désigne une communication successive, partant de l'installation de télécommunication à central privé, respectivement d'une partie de message mémorisée pour le second terminal de télécommunication (T2), l'unité de commande centrale (CPU) interroge le premier dispositif de mémoire (ZSP2) associé au second terminal de télécommunication (T2), en ce qui concerne la présence d'une indication de message, et, dans le cas de la présence d'une indication de message, interroge des parties déterminées de message à partir des seconds dispositifs de mémoire (TSP1, ... TSPn) pour le second terminal de télécommunication (T2) et les envoie au second terminal de télécommunication (T2),
que l'unité de commande centrale (CPU) contrôle les seconds dispositifs de mémoire (TSP1, TSP2, ... TSPn), en ce qui concerne la présence de messages pour des centraux déterminés de télécommunication qui reçoivent des messages, et, lors de l'accès respectivement d'un premier message, enregistre une indication correspondante des messages dans les premiers dispositifs de mémoire (ZSP1, ZSP2... ZSPn), qui sont associés au terminal respectif de télécommunication (T1, T2, ..., Tn), qui reçoit les messages,
que, d'une manière déclenchée par une troisième instruction produite par le second terminal de télécommunication (T2), et lors de la présence d'une indication de message dans le premier dispositif de mémoire (ZSP2) associé au second terminal de télécommunication (T2), l'unité de commande centrale (CPU) appelle des messages déterminés à partir des seconds dispositifs de mémoire (TSP1, ... TSPn) et les envoie au second terminal de télécommunication (T2).

5. Dispositif suivant la revendication 4, caractérisé par le fait que des unités de commande séparées (TCPU1, TCPU2, ...), qui coopèrent avec l'unité de commande centrale (CPU), sont associées aux seconds dispositifs de mémoire (TSP1, TSP2, ... TSPn).
